# EUROPÄISCHE PATENTANMELDUNG

(11) **EP 3 812 209 A1**
(43) Veröffentlichungstag der Anmeldung: **28.04.2021**
(21) Anmeldenummer: 19204741.3
(22) Anmeldetag: 23.10.2019
(51) Int. Cl.: B60Q 1/00, F21S 41/176, F21S 41/675, G01S 17/931, B60Q 1/06, F21S 41/13

(54) **LICHTMODUL FÜR KRAFTFAHRZEUGE**

(71) Anmelder: ZKW Group GmbH, 3250 Wieselburg (AT)
(72) Erfinder: Brandstetter, Martin, 3370 Ybbs (AT); Altmann, Johann, 3950 Gmünd (AT); Artmann, Matthäus, 3370 Ybbs an der Donau (AT); Hartmann, Peter, 3392 Schönbühel-Aggsbach (AT); Weißensteiner, Stefan, 3961 Waldenstein (AT)
(74) Vertreter: Patentanwaltskanzlei Matschnig & Forsthuber OG

(57) **Zusammenfassung**

Ein Lichtmodul für Kraftfahrzeuge, mit einer ersten Laseranordnung (Ls), welche zumindest eine modulierbaren Laserlichtquelle (L1, L2, L3, L4) enthält, deren Laserstrahl/Laserstrahlen (b1, b2, b3, b4) auf einen verschwenkbaren, von einer Spiegelansteuerung (8) angesteuerten Mikrospiegel (6) und von diesem auf ein Lichtkonversionsmittel (7) gelenkt wird, und mit einer Beleuchtungsoptik (9) zur Projektion des an dem Lichtkonversionsmittel erzeugten Leuchtbildes (10) in den Verkehrsraum/Fahrbahn, als Beleuchtungssystem, und mit einer zweiten Laseranordnung (V_{L}), welche zumindest eine Laserlichtquelle (H1, H2, H3) enthält, deren Laserstrahl/Laserstrahlen (c1, c2, c3) auf den verschwenkbaren, von der Spiegelansteuerung (8) angesteuerten Mikrospiegel (6) und von diesem über eine LIDAR-Austrittsoptik (21) in den Verkehrsraum/Fahrbahn gesandt wird, sowie mit einer LIDAR-Eintrittsoptik (14), welche im Außenraum reflektiertes Licht der zweiten Laseranordnung zu einem Detektor (15) sendet, als LIDAR-System.

## Beschreibung

Die Erfindung bezieht sich auf ein Lichtmodul für Kraftfahrzeuge.

Der Einsatz von Laserlichtquellen in Kraftfahrzeugen gewinnt ständig an Bedeutung, da z.B. die Abmessungen von Laserdioden verglichen mit üblichen Leuchtdioden kleiner sind, was flexiblere und effizientere Einbaulösungen ermöglich, und auch die Leuchtdichte des Lichtbündels sowie die Lichtausbeute erheblich gesteigert werden kann. Bei den bekannten Lösungen wird kein direkter Laserstrahl emittiert, um eine Gefährdung der Augen von Menschen und anderen Lebewesen durch den extrem gebündelten Lichtstrahl hoher Leistung zu vermeiden. Der Laserstrahl wird vielmehr auf einen zwischengeschalteten Konverter, der ein Lumineszenzkonversionsmaterial, kurz "Phosphor" genannt, enthält, von z.B. blauem Licht in vorzugsweise "weißes" Licht umgewandelt.

Beispielsweise geht aus dem Dokument EP 2 954 256 B1 der Anmelderin ein Scheinwerfer als bekannt hervor, welcher mehrere modulierbare Laserlichtquellen aufweist, deren Laserstrahl über einen verschwenkbaren, von einer Spiegelansteuerung angesteuerten Mikrospiegel auf ein Lichtkonversionsmittel gelenkt wird, wobei das auf diesem erzeugte Leuchtbild mit einem Projektionssystem auf die Fahrbahn projiziert wird. Zum Modulieren der Strahlintensität der Laserlichtquellen ist eine Laseransteuerung vorgesehen und zwischen jeder Laserlichtquelle und dem Mikrospiegel ist eine Optik zur Formung je eines Laserstrahls mit vorgegebenem Strahlquerschnitt angeordnet. Der Mikrospiegel schwingt mit fester Frequenz um eine Achse, wobei die Strahlen der zumindest zwei Laserlichtquellen zur Bildung aneinander liegender Lichtbänder an dem Lichtkonversionsmittel über den Mikrospiegel umgelenkt sind. Der Abstand der Lichtbänder voneinander ist durch den gegenseitigen Winkel der geformten Laserstrahlen festgelegt und die Länge der Lichtbänder an dem Lichtkonversionsmittel durch die Schwingungsamplitude des Mikrospiegels.

Insbesondere für Assistenzsysteme in Kraftfahrzeugen, besonders für autonomen oder teilautonomen Betrieb ist LIDAR (Akronym für "light detection and ranging") eine günstige und verlässliche Methode zur optischen Vermessung der Umgebung bzw. zur Abstands- und Geschwindigkeitsmessung anderer Verkehrsteilnehmer. Naturgemäß ist ein großer überwachter Winkelbereich des Verkehrsraums vor dem Fahrzeug hier von besonderer Bedeutung. Zumindest ein Teilbereich des in Frage stehenden Überwachungsbereich wird auch von den Scheinwerfern des Fahrzeuges ausgeleuchtet, wobei sinngemäß auch einen Bereich hinter dem Fahrzeug messendes LIDAR und Heckscheinwerfer nicht außer Acht zu lassen sind.

Ein Problem heutiger Kraftfahrzeuge ist der oft nur geringe zur Verfügung stehende Bauraum für Beleuchtungssysteme einerseits und Sensorsysteme andererseits, wobei dieses Problem oft durch ästhetische Vorgaben von Designern vergrößert wird. Ein weiters Problem ist darin zu sehen, dass Scheinwerfer ebenso wie LIDAR-Systeme präzise eingebaut und justiert werden müssen, um die gewünschte Funktion sicher zu stellen.

Eine Aufgabe der Erfindung ist darin zu sehen, diese Probleme zu verringern bzw. zu beseitigen.

Diese Aufgabe wird mit einem Lichtmodul für Kraftfahrzeuge gelöst, mit einer ersten Laseranordnung, welche zumindest eine modulierbaren Laserlichtquelle enthält, deren Laserstrahl/Laserstrahlen auf einen verschwenkbaren, von einer Spiegelansteuerung angesteuerten Mikrospiegel und von diesem auf ein Lichtkonversionsmittel gelenkt wird, und mit einer Beleuchtungsoptik zur Projektion des an dem Lichtkonversionsmittel erzeugten Leuchtbildes in den Verkehrsraum/Fahrbahn, als Beleuchtungssystem, und mit einer zweiten Laseranordnung, welche zumindest eine Laserlichtquelle enthält, deren Laserstrahl/Laserstrahlen auf den verschwenkbaren, von der Spiegelansteuerung angesteuerten Mikrospiegel und von diesem über eine LIDAR-Austrittsoptik in den Verkehrsraum/Fahrbahn gesandt wird, sowie mit einer LIDAR-Eintrittsoptik, welche im Außenraum reflektiertes Licht der zweiten Laseranordnung zu einem Detektorarray sendet, als LIDAR-System.

Dank der Erfindung erhält man ein Lichtmodul, welches bei kompakter Bauweise zwei Funktionen unabhängig voneinander ausführen kann, nämlich eine Beleuchtungsfunktion und eine Messfunktion.

Im Sinne einer Unabhängigkeit der beiden Funktionen des Lichtmoduls ist es von Vorteil, wenn der Einfallswinkel des Laserstrahls/der Laserstrahlen) der ersten Laseranordnung auf den Mikrospiegel unterschiedlich von dem Einfallswinkel des Laserstrahls/der Laserstrahlen der zweiten Laseranordnung ist. Dies gilt natürlich für je eine bestimmte Position des Mikrospiegels und führt naturgemäß auch zu unterschiedlichen Austrittswinkeln.

Es ist zweckmäßig, wenn die erste Laseranordnung zumindest zwei Laserlichtquellen umfasst, welchen eine Laseransteuerung zum Modulieren der Strahlintensität zugeordnet ist.

Es kann auch vorteilhaft sein, falls der ersten Laseranordnung und dem Mikrospiegel zumindest eine Optik zur Formung je eines Laserstrahls mit vorgegebenem Strahlquerschnitt angeordnet ist.

Um einen kompakteren Aufbau des Moduls zu erhalten, kann es empfehlenswert sein, wenn zwischen der ersten Laseranordnung und dem Mikrospiegel zumindest ein Umlenkspiegel angeordnet ist.

Falls zwischen der zweiten Laseranordnung und dem Mikrospiegel zumindest ein Umlenkspiegel angeordnet ist, führt dies gleichfalls zu einem kompakteren, raumsparenden Aufbau.

Bei Weiterbildungen der Erfindung ist vorgesehen, dass die erste Laseranordnung zumindest einen blauen/ultravioletten Laser enthält und/oder dass die zweite Laseranordnung zumindest einen Infrarot-Laser enthält.

Um eine möglichst vollständige Reflexion sowohl für ultraviolette bzw. blaue Laserstrahlung als auch für infrarote Laserstrahlung zu erhalten, ist es empfehlenswert, wenn die reflektierende Beschichtung des Mikrospiegels aus der Gruppe der Metalle Gold, Aluminium, Silber ausgewählt ist.

Es hat sich als bewährt erwiesen, wenn der Mikrospiegel mit fester Frequenz um eine Achse schwingt, wobei die Strahlen der Laserlichtquellen der ersten Laseranordnung zur Bildung zumindest zweier aneinander liegender Lichtbänder an dem Lichtkonversionsmittel über den Mikrospiegel umgelenkt sind.

Der Abstand der Lichtbänder voneinander wird zweckmäßigerweise durch den gegenseitigen Winkel der geformten Strahlen der Laserlichtquellen der ersten Laseranordnung festgelegt und die Länge der Lichtbänder an dem Lichtkonversionsmittel ist durch die Schwingungsamplitude des Mikrospiegels und die Breite der Lichtbänder durch den Strahlquerschnitt bestimmt.

In Hinblick auf den kompakten Aufbau des Moduls ist es von besonderem Vorteil, wenn zum Justieren der Strahlengänge des Beleuchtungssystems und des LIDAR-Systems die Laserlichtquellen zumindest einer Laseranordnung und/oder die in den Strahlengängen befindlichen Spiegel einstellbar sind.

Es kann auch zweckmäßig sein, wenn der Scanbereich des LIDAR-Systems und der Beleuchtungsbereich des Beleuchtungssystems zueinander winkelversetzt sind, sodass das LIDAR-System schräg zur Beleuchtung scannt. Dadurch können beispielsweise Objekte erfasst werden, die außerhalb, insbesondere seitlich von dem Ausleuchtungsbereich des Scheinwerfersystems liegen.

Vorteilhaft kann es auch sein, wenn das LIDAR-System und das Beleuchtungssystem über die Beleuchtungsoptik bzw. die LIDAR-Austrittsoptik unterschiedliche Sichtfelder überstreichen bzw. ausleuchten. Dabei kann es sinnvoll sein, wenn die LIDAR-Austrittsoptik so ausgelegt sein, dass das LIDAR-System einen Bereich des Verkehrsraums abscannt, welcher breiter ist als der Beleuchtungsbereich des Beleuchtungssystems.

Sinnvoll kann es weiters sein, wenn für die Optiken des LIDAR-Systems diffraktive optische Elemente eingesetzt sind, beispielsweise Beugungsgitter.

Ebenso können die Optiken im Laserpfad des Beleuchtungssystems als diffraktive optische Elemente ausgebildet sein.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 den prinzipiellen Aufbau eines Kraftfahrzeug-Scheinwerfers, der auf Basis eines Laserscanners arbeitet,
Fig. 2 das Prinzip eines scannenden LIDAR-Systems,
Fig. 3 den prinzipiellen Aufbau eines erfindungsgemäßen Lichtmoduls,
Fig. 4 eine beispielsweise Lichtverteilung eines Moduls nach der Erfindung,
Fig. 5a und b den von beiden Systemen überstrichenen Bereich in einer ersten Variante und
Fig. 6a und b den von beiden Systemen überstrichenen Bereich in einer zweiten Variante.

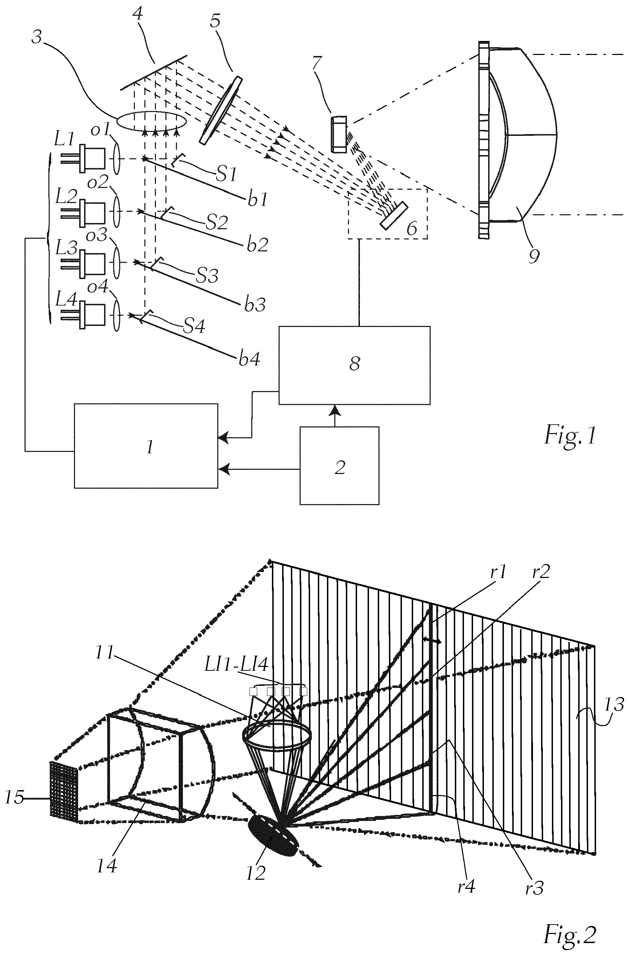

**Fig.1** zeigt das Prinzip eines Laserscanner-Scheinwerfers, mit einer ersten Laseranordnung L_{S}, welche zumindest einen Laser, im vorliegenden Fall vier Halbleiterlaser **L1, L2, L3, L4** aufweist, die je einen Laserstrahl abgeben, der mit **b1, b2, b3, b4** bezeichnet ist. Den Lasern L1, L2, L3, L4 ist eine Laseransteuerung **1** zugeordnet, wobei diese Ansteuerung zur Stromversorgung dient und auch zum Modulieren der Strahlintensität der einzelnen Laser eingerichtet ist. Unter "Modulieren" wird in Zusammenhang mit der vorliegenden Erfindung verstanden, dass die Intensität einer Laserlichtquelle geändert werden kann, sei es kontinuierlich oder gepulst, im Sinne eines Ein- und Ausschaltens. Die Lichtleistung kann analog dynamisch geändert werden, je nachdem, an welcher Winkelposition ein später näher beschriebener Spiegel steht. Zusätzlich gibt es noch die Möglichkeit des Ein und Ausschaltens für eine gewisse Zeit, um definierte Stellen nicht zu beleuchten.

Die Laseransteuerung 1 enthält ihrerseits wiederum Signale von einer zentralen Scheinwerferansteuerung **2,** welcher Sensorsignale zugeführt werden können. Solche Steuer- und Sensorsignale können einerseits beispielsweise Schaltbefehle zum Umschalten von Fernlicht auf Abblendlicht sein oder andererseits Signale, die von Lichtsensoren aufgenommen werden, welche die Beleuchtungsverhältnisse auf der Fahrbahn erfassen.

Die Laserstrahlen b1, b2, b3, b4 sind über je einen Umlenkspiegel **S1, S2, S3, S4** und über eine erste Optik 3 zu einem gemeinsamen Umlenkspiegel **4** gerichtet, welcher die vier Laserstrahlen über eine weitere Optik **5** über einen Mikrospiegel **6** auf ein beispielsweise als Leuchtfläche ausgebildetes Lichtkonversionsmittel **7** richtet, welche z.B. in bekannter Weise einen Phosphor zur Lichtkonversion aufweist. Den Lasern können Optiken **o1, o2, o4, o4** zur Strahlformung nachgeordnet sein, wie in der EP 2 954 256 B1 erläutert.

Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionsmittel kommen auch Optokeramiken in Frage, das sind transparente Keramiken, wie beispielsweise YAG-Ce (ein Yttrium-Aluminium-Granat mit Cer dotiert).

Der um lediglich eine einzige Achse schwingende Mikrospiegel 6 wird von einer Spiegelansteuerung 8 angesteuert und in Schwingungen konstanter Frequenz versetzt, wobei diese Schwingungen insbesondere der mechanischen Eigenfrequenz des Mikrospiegels entsprechen können. Auch die Spiegelansteuerung 8 wird ihrerseits von der Scheinwerferansteuerung 2 gesteuert, um die Schwingungsamplitude des Mikrospiegels 6 einstellen zu können, wobei auch asymmetrisches Schwingen um seine Achse einstellbar sein kann. Die Ansteuerung von Mikrospiegeln ist bekannt und kann auf vielerlei Art erfolgen, z.B. elektrostatisch oder elektrodynamisch. Bei erprobten Ausführungsformen der Erfindung schwingt der Mikrospiegel 6 beispielsweise mit einer Frequenz von einigen hundert Hz und sein maximaler Ausschlag beträgt in Abhängigkeit von seiner Ansteuerung einige wenige Grad bis 60°. Die Position des Mikrospiegels 6 wird zweckmäßigerweise an die Spiegelansteuerung 8 und/oder an die Scheinwerferansteuerung 2 rückgemeldet. Es sei angemerkt, dass für Mikrospiegel der hier in Frage kommenden Art oft das Akronym MEMS ("microelectromechanical system mirrors") verwendet wird.

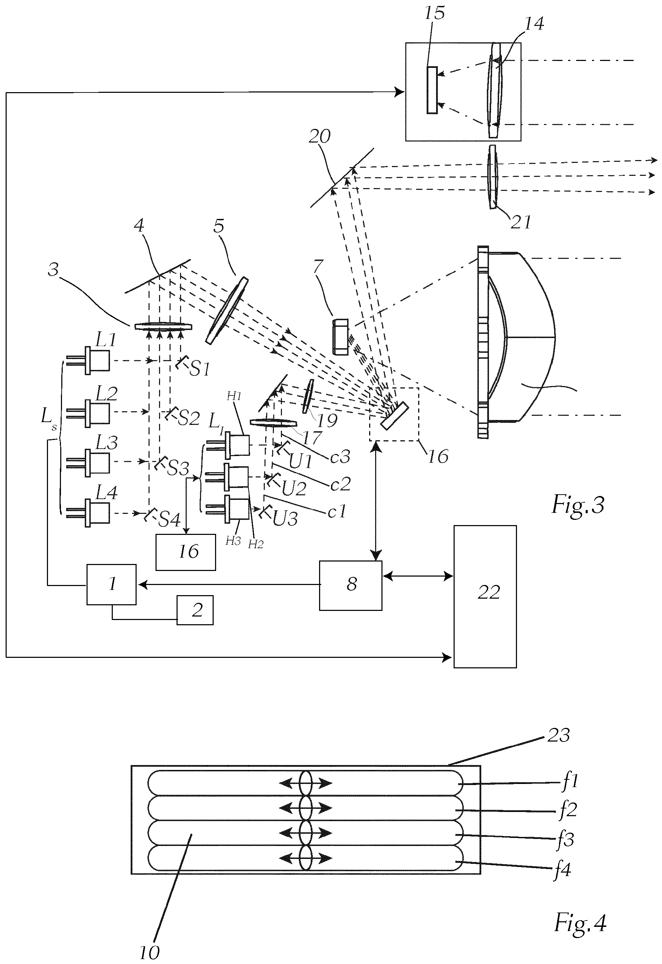

Die geformten Laserstrahlen b1, b2, b3, b4 erzeugen an dem Lichtkonversionsmittel 7, nämlich auf der Leuchtfläche des Lichtkonversionsmittels 7, die im Allgemeinen eben ist, jedoch nicht eben sein muss, horizontale Lichtbänder **f1, f2, f3, f4** (siehe Fig. 4), wobei der Winkel der Laserstrahlen b1, b2, b3, b4 bzw. der Halbleiterlaser L1, L2, L3, L4 bezüglich des Mikrospiegels 6 so eingestellt ist, dass die Lichtbänder auf der Leuchtfläche übereinanderliegen und aneinander angrenzen, wobei der Abstand der Lichtbänder voneinander bevorzugt Null ist. Dies kann durch entsprechendes Justieren der Halbleiterlaser L1, L2, L3, L4 genau eingestellt werden und auf der Leuchtfläche entsteht ein Leuchtbild, das aus den Lichtbändern, im vorliegenden Fall vier Lichtbändern f1, f2, f3, f4, zusammengesetzt ist. Dieses Leuchtbild wird nun mit einer Beleuchtungsoptik **9** als Leuchtbild **10** (Fig. 4) auf die Fahrbahn bzw. in den Außenraum projiziert. Die Verwendung von nur drei Lasern zur Bildung von drei auf die Fahrbahn projizierten Lichtbändern ist beispielsweise gleichfalls möglich, da diese Lichtbänder dann einem Fernlicht, der Hell-Dunkel-Grenze und einem Abblendlicht (Vorfeldlicht) entsprechen können. Im einfachsten Fall kann auch nur ein einziger Laser vorgesehen sein.

**Fig. 2** zeigt das Prinzip eines LIDAR-Systems, wie beispielsweise in dem Artikel "MEMS-based lidar for autonomous driving", H.W. Yoo et al., e&i 6.2018, p. 408ff beschrieben. Die gepulsten Strahlen mehrerer Laser **LI1, LI2, LI3, LI4** werden über eine Optik **11** zu einem Mikrospiegel **12** gesandt, welcher vier von den Lasern LI1, LI2, LI3, LI4 erzeugte vertikale Linien **r1, r2, r3, r4** horizontal scannend in den Außenraum führt und dabei ein gewisses Feld **13** überstreichen. Die Anzahl der Laser und damit der erzeugten vertikalen Linien kann eine andere als vier sein, nämlich mehr oder weniger als vier und im einfachsten Fall kann ein einziger Laser Verwendung finden. Laserimpulse, die von Objekten im Außenraum (Verkehrsraum) reflektiert werden, gelangen über eine fokussierende LIDAR-Eintrittsoptik **14** zu einem Detektor **15** und die dort erzeugten Signale werden nach entsprechender Verstärkung und Umwandlung ausgewertet, um Objekte hinsichtlich ihrer Position und/oder Geschwindigkeit, Größe etc. rasch erfassen zu können.

**Fig. 3** zeigt nun ein erfindungsgemäßes Lichtmodul für ein Kraftfahrzeug, wobei, soweit dies möglich ist, gleiche Bezugszeichen für Elemente verwendet werden, die bereits an Hand der Fig. 1 und Fig. 2 beschrieben wurden.

Der Aufbau des Abschnittes für den Laserscanner-Scheinwerfer entspricht genau dem in Fig. 1 dargestellten und wurde in Zusammenhang mit Fig. 1 bereits ausführlich beschrieben. Das Lichtmodul enthält nun zusätzlich zu den Scheinwerferkomponenten, nämlich den vier Halbleiterlasern L1, L2, L3, L4 mit der Laseransteuerung 1, der Scheinwerferansteuerung 2, den Spiegeln S1, S2, S3, S4, dem Umlenkspiegel 4, der Optik 5, dem Mikrospiegel 6, dem Lichtkonversionsmittel 7, der Spiegelansteuerung 8 und der Beleuchtungsoptik 9 eine zweite Laseranordnung **L_{L},** welche zumindest einen Laser, im vorliegenden Fall drei Halbleiterlaser **H1, H2, H3** aufweist, die je einen Laserstrahl abgeben, der mit **c1, c2, c3** bezeichnet ist. Auch den Lasern H1, H2, H3 ist eine Laseransteuerung **16** zugeordnet. Die Laserstrahlen c1, c2, c3 gelangen ebenfalls auf den Mikrospiegel 6, und zwar im vorliegenden Fall unter optischer Zwischenschaltung dreier Umlenkspiegel **U1, U2, U3,** einer Optik **17,** eines den drei Strahlen gemeinsamen Umlenkspiegels **18** sowie einer weiteren Optik **19.** Von dem Mikrospiegel 6 werden die scannenden Strahlen des LIDAR-Systems über einen Umlenkspiegel **20** und eine LIDAR-Austrittsoptik **21** in den Verkehrsraum/Fahrbahn gesandt.

Die von Objekten im Außenraum (Verkehrsraum) reflektierten Lichtsignale gelangen über die LIDAR-Eintrittsoptik 14 zu dem Detektor 15 und die dort erzeugten Signale werden einer LIDAR-Steuerung/Auswertung **22** zugeführt und hier nach entsprechender Verstärkung und Umwandlung ausgewertet, um die erfassten Objekte hinsichtlich ihrer Position und/oder Geschwindigkeit, Größe etc. zu bestimmen. Die LIDAR-Steuerung/Auswertung 22 steht gleichfalls mit der Spiegelansteuerung 8 in Verbindung und, was hier nicht näher gezeigt ist, mit der Steuerung des zugehörigen Fahrzeuges.

Man erkennt in der Darstellung der Fig. 3 dass für beide Systeme, nämlich das Scheinwerfersystem und das LIDAR-System der Mikrospiegel gemeinsam verwendet wird, die Strahlengänge beider Systeme jedoch getrennt verlaufen, d.h. die Strahlen des LIDAR-Systems treffen nicht auf das Lichtkonversionsmittel 7 und die Strahlen des Scheinwerfersystems gelangen nicht zur LIDAR-Austrittsoptik.

Im Sinne einer Unabhängigkeit der beiden Funktionen des Lichtmoduls ist es von Vorteil, wenn der Einfallswinkel des Laserstrahls/der Laserstrahlen) der ersten Laseranordnung auf den Mikrospiegel unterschiedlich von dem Einfallswinkel des Laserstrahls/der Laserstrahlen der zweiten Laseranordnung ist. Dies gilt natürlich für je eine bestimmte Position des Mikrospiegels und führt naturgemäß auch zu unterschiedlichen Austrittswinkeln. Mit anderen Worten werden die IR-Strahlen des LIDAR-Systems unter einem anderen Winkel als die blauen oder ultravioletten Laserstrahlen des Beleuchtungssystems reflektiert und beide Strahlengruppen treten aus dem Modul aus, wobei jedenfalls für das LIDAR-System eine andere Austrittsoptik verwendet wird, als für die Beleuchtung. Die Laser werden entsprechend moduliert um anhand von Tof Methoden oder FMCW Methoden (Time of Flight (ToF), Frequency Modulated Continuous Wave lidar) mittels der von dem Detektor abgegebenen Signale den Abstand eines Objekts im Verkehrsraum zu bestimmen. Die Infrarot-Strahlen und die blauen Laserstrahlen werden immer von derselben Spiegelposition reflektiert, der Strahlengang ist aber geometrisch getrennt, weshalb das Modul gleichzeitig im LIDAR und im Beleuchtungs-Betrieb arbeiten kann.

Die gesamte Steuerung der Systeme, insbesondere auch die Spiegelansteuerung 8 ist so ausgebildet, dass beide Systeme unabhängig voneinander funktionieren und simultan oder abwechselnd arbeiten können. Um dies zu gewährleisten und in Hinblick auf den kompakten Aufbau des Moduls ist es von besonderem Vorteil, wenn zum Justieren der Strahlengänge des Beleuchtungssystems und des LIDAR-Systems die Laserlichtquellen zumindest einer Laseranordnung und/oder die in den Strahlengängen befindlichen Spiegel einstellbar sind.

Während die Halbleiterlaser L1, L2, L3, L4 vorzugsweise mit Wellenlängen im blauen oder UV-Bereich arbeiten sollen, um durch Umwandlung auf dem Phosphor weißes Licht zu erzeugen, arbeiten die Halbleiterlaser H1, H2, H3 des LIDAR-Systems vorzugsweise mit Wellenlängen im IR-Bereich, um für das menschliche Auge nicht sichtbare Strahlung zu erzeugen. Es ist natürlich darauf zu achten, dass im vorliegenden Fall ein Mikrospiegel 6 erforderlich ist, der hinreichend gute Reflexionseigenschaften für beide verwendete Lichtwellenlängen aufweist. In diesem Sinn eignen sich besonders Beschichtungen vorrangig aus Gold oder auch aus Aluminium oder Silber. Eine möglichst vollkommene Reflexion der aauf den Mikrospiegel auftreffenden Laserstrahlung verringert das Problem einer zu starken Erwärmung des MEMS.

**Fig. 4** stellt schematisch eine beispielsweise Lichtverteilung des Lichtmoduls nach der Erfindung dar, wobei hier vier Lichtbänder f1, f2, f3, f4 mit "weißem" Licht, welche ihren Ausgangspunkt in der ersten Laseranordnung **L_{S}** haben, übereinander liegen und das Leuchtbild 10 bilden. Die Lichtbänder entstehen durch die Scanbewegung der von den Laserstrahlen herrührenden Leuchtflecke **m1, m2, m3, m4.** Der durch das LIDAR-System gescannte Bereich ist hier durch dessen Begrenzung **23** dargestellt.

Das LIDAR-System und das Beleuchtungssystem können ein unterschiedliche Sichtfeld überstreichen bzw. ausleuchten, was durch die getrennten Optiken, nämlich die Beleuchtungsoptik 9 und die LIDAR-Austrittsoptik 21 möglich ist. Unter dem Begriff "Sichtfeld" ist hier für das Beleuchtungssystem der ausgeleuchtete Bereich im Verkehrsraum zu verstehen, der je nach aktueller Beleuchtungssituation (z.B. Fernlicht - Abblendlicht -Taglicht) unterschiedlich groß sein kann, und für das LIDAR-System der durch die LIDAR-Lasersstrahlen abgescannte Bereich, in welchem Objekte erfasst werden können.

Dadurch können die Abbildungsbereiche von LIDAR und Beleuchtung unterschiedlich sein, obwohl für beide Systeme derselbe MEMS-Scanner, nämlich der Mikrospiegel 6, verwendet wird. Beispielsweise kann die LIDAR-Austrittsoptik 21 so ausgelegt sein, dass das LIDAR-System einen Bereich des Verkehrsraums abscannt, welcher breiter ist als der Beleuchtungsbereich des Beleuchtungssystems. Es ist auch möglich, den Scanbereich des LIDAR-Systems und den Beleuchtungsbereich des Beleuchtungssystems winkelversetzt auszulegen, sodass das LIDAR schräg zur Beleuchtung scannt.

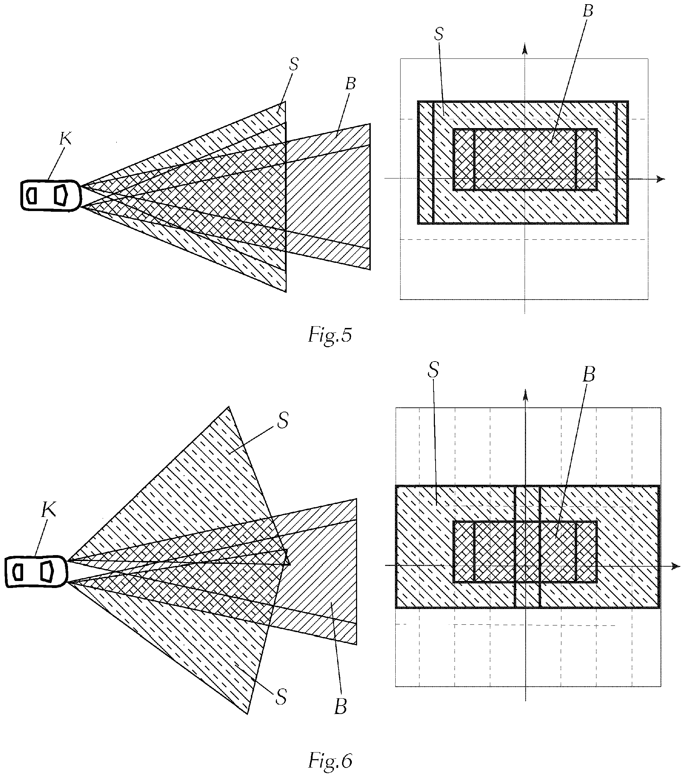

Zur Veranschaulichung ist in **Fig 5a und b** ein erstes Beispiel für einen Beleuchtungsbereich **B** des Beleuchtungssystems und einen Scanbereich **S** des LIDAR-Systems eines Kraftfahrzeuges **K** mit zwei Lichtmodulen nach der Erfindung gezeigt. Fig. 5a zeigt die Bereiche in einer Sicht von oben und Fig. 5b zeigt die Bereiche vom Fahrzeug aus nach vorne gesehen. Hier umfasst der Beleuchtungsbereich B einen kleineren Winkel als der Scanbereich S, beide Bereiche sind jedoch nach vorne gerichtet.

**Fig. 6a und b** zeigt in einer Darstellung sinngemäß wie Fig. 5a und b ein zweites Beispiel für einen Beleuchtungsbereich B und einen Scanbereich S eines Kraftfahrzeuges K mit zwei Lichtmodulen nach der Erfindung. Hier verläuft der Beleuchtungsbereich B, gleich wie bei Fig. 5a und b, unter einem bestimmten Winkel in Fahrtrichtung nach vorne, wogegen sich der Scanbereich S des LIDAR-Systems, sozusagen zweigeteilt, auch weit nach links außen und rechts außen erstreckt.

Man sieht, dass das LIDAR einen breiteren Bereich abdecken kann als die Beleuchtungsoptik, und auch zur Seite geschwenkt sein kann, wobei sich die Sichtbereiche des LIDARs eines linken und rechten Scheinwerfers gerade noch überlappen. Die Beleuchtungsoptik muss allerdings immer gerade nach vorne ausgerichtet sein.

Als Optiken 14, 17, 19, 21 für das LIDAR-Systemkönnen diffraktive optische Elemente verwendet werden, beispielsweise Beugungsgitter, da hier Laserstrahlung mit geringer spektraler Bandbreite, vorzugsweise monochromatisch, verwendet wird. Auch die Optiken o1 - o4, 3, 5 im blauen Laserpfad des Beleuchtungssystems können als diffraktive Elemente ausgebildet sein. Die Projektionsoptik im Strahlengang des "weißen" Lichtes nach dem Lichtkonversionsmittel 7 sollte allerdings zweckmäßigerweise eine Linsenoptik sein, da hier Farbfehler vermieden werden sollen.

**Liste der Bezugszeichen**

| | | | |
|---|---|---|---|
| 1 | Laseransteuerung | H1 | Halbleiterlaser |
| 2 | Scheinwerferansteuerung | H2 | Halbleiterlaser |
| 3 | Optik | H3 | Halbleiterlaser |
| 4 | Umlenkspiegel | K | Kraftfahrzeug |
| 5 | Optik | L_{I} | zweite Laseranordnung |
| 6 | Mikrospiegel | L_{S} | erste Laseranordnung |
| 7 | Lichtkonversionsmittel | L1 | Halbleiterlaser |
| 8 | Spiegelansteuerung | L2 | Halbleiterlaser |
| 9 | Beleuchtungsoptik | L3 | Halbleiterlaser |
| 10 | Leuchtbild | L4 | Halbleiterlaser |
| 11 | Optik | LI1 | Laser |
| 12 | Mikrospiegel | LI2 | Laser |
| 13 | Feld | LI3 | Laser |
| 14 | LIDAR-Eintrittsoptik | LI4 | Laser |
| 15 | Detektor | m1 | Leuchtfleck |
| 16 | Laseransteuerung | m2 | Leuchtfleck |
| 17 | Optik | m3 | Leuchtfleck |
| 18 | Umlenkspiegel | m4 | Leuchtfleck |
| 19 | Optik | o1 | Optik |
| 20 | Umlenkspiegel | o2 | Optik |
| 21 | LIDAR-Austrittsoptik | o3 | Optik |
| 22 | LIDAR-Steuerung/Auswertung | o4 | Optik |
| 23 | Begrenzung | r1 | vertikale Linie |
| | | r2 | vertikale Linie |
| B | Beleuchtungsbereich | r3 | vertikale Linie |
| b1 | Laserstrahl | r4 | vertikale Linie |
| b2 | Laserstrahl | S | Scanbereich |
| b3 | Laserstrahl | S1 | Umlenkspiegel |
| b4 | Laserstrahl | S2 | Umlenkspiegel |
| c1 | Laserstrahl | S3 | Umlenkspiegel |
| c2 | Laserstrahl | S4 | Umlenkspiegel |
| c3 | Laserstrahl | U1 | Umlenkspiegel |
| f1 | Lichtband | U2 | Umlenkspiegel |
| f2 | Lichtband | U3 | Umlenkspiegel |
| f3 | Lichtband | | |

## Patentansprüche

1. Lichtmodul für Kraftfahrzeuge
mit einer ersten Laseranordnung (Ls), welche zumindest eine modulierbaren Laserlichtquelle (L1, L2, L3, L4) enthält, deren Laserstrahl/Laserstrahlen (b1, b2, b3, b4) auf einen verschwenkbaren, von einer Spiegelansteuerung (8) angesteuerten Mikrospiegel (6) und von diesem auf ein Lichtkonversionsmittel (7) gelenkt wird, und mit einer Beleuchtungsoptik (9) zur Projektion des an dem Lichtkonversionsmittel erzeugten Leuchtbildes (10) in den Verkehrsraum/Fahrbahn, als Beleuchtungssystem,
und mit einer zweiten Laseranordnung (V_{L}), welche zumindest eine Laserlichtquelle (H1, H2, H3) enthält, deren Laserstrahl/Laserstrahlen (c1, c2, c3) auf den verschwenkbaren, von der Spiegelansteuerung (8) angesteuerten Mikrospiegel (6) und von diesem über eine LIDAR-Austrittsoptik (21) in den Verkehrsraum/Fahrbahn gesandt wird, sowie mit einer LIDAR-Eintrittsoptik (14), welche im Außenraum reflektiertes Licht der zweiten Laseranordnung zu einem Detektor (15) sendet, als LIDAR-System.

2. Lichtmodul nach Anspruch 1, **dadurch gekennzeichnet, dass** der Einfallswinkel des Laserstrahls/der Laserstrahlen (b1, b2, b3, b4) der ersten Laseranordnung (Ls) auf den Mikrospiegel (6) unterschiedlich von dem Einfallswinkel des Laserstrahls/der Laserstrahlen (c1, c2, c3) der zweiten Laseranordnung (V_{L}) ist.

3. Lichtmodul nach Anspruch 1 oder 2, **dadurch gekennzeichnet, dass** die erste Laseranordnung (Ls) zumindest zwei Laserlichtquellen (1a, 1b, 1c, 1d) umfasst, welchen eine Laseransteuerung (1) zum Modulieren der Strahlintensität zugeordnet ist.

4. Lichtmodul nach einem der Ansprüche 1 bis 3, **dadurch gekennzeichnet, dass** zwischen der ersten Laseranordnung (Ls) und dem Mikrospiegel (6) zumindest eine Optik (o1, o2, o3, o4) zur Formung je eines Laserstrahls (b1, b2, b3, b4) mit vorgegebenem Strahlquerschnitt angeordnet ist.

5. Lichtmodul nach einem der Ansprüche 1 bis 4, **dadurch gekennzeichnet, dass** zwischen der ersten Laseranordnung (Ls) und dem Mikrospiegel (6) zumindest ein Umlenkspiegel (4, S1 - S4) angeordnet ist.

6. Lichtmodul nach einem der Ansprüche 1 bis 5, **dadurch gekennzeichnet, dass** zwischen der zweiten Laseranordnung (V_{L}) und dem Mikrospiegel (6) zumindest ein Umlenkspiegel (18, U1 - U3) angeordnet ist.

7. Lichtmodul nach einem der Ansprüche 1 bis 6, **dadurch gekennzeichnet, dass** die erste Laseranordnung zumindest einen blauen/ ultravioletten Laser enthält.

8. Lichtmodul nach einem der Ansprüche 1 bis 7, **dadurch gekennzeichnet, dass** die zweite Laseranordnung zumindest einen Infrarot-Laser enthält.

9. Lichtmodul nach einem der Ansprüche 1 bis 8, **dadurch gekennzeichnet, dass** die reflektierende Beschichtung des Mikrospiegels (6) aus der Gruppe der Metalle Gold, Aluminium, Silber ausgewählt ist.

10. Lichtmodul nach einem der Ansprüche 1 bis 9, **dadurch gekennzeichnet, dass** der Mikrospiegel (6) mit fester Frequenz um eine Achse schwingt, wobei die Strahlen der Laserlichtquellen der ersten Laseranordnung (Ls) zur Bildung zumindest zweier aneinander liegender Lichtbänder (f1, f2, f3, f4) an dem Lichtkonversionsmittel (7) über den Mikrospiegel umgelenkt sind

11. Lichtmodul nach einem der Ansprüche 1 bis 10, **dadurch gekennzeichnet, dass** der Abstand der Lichtbänder (f1, f2, f3, f4) voneinander durch den gegenseitigen Winkel der geformten Strahlen der Laserlichtquellen der ersten Laseranordnung (Ls) festgelegt, die Länge der Lichtbänder an dem Lichtkonversionsmittel (7) durch die Schwingungsamplitude des Mikrospiegels (6) und die Breite der Lichtbänder durch den Strahlquerschnitt bestimmt ist.

12. Lichtmodul nach einem der Ansprüche 1 bis 11, **dadurch gekennzeichnet, dass** zum Justieren der Strahlengänge des Beleuchtungssystems und des LIDAR-Systems die Laserlichtquellen (L1, L2, L3, L4; H1, H2, H3) zumindest einer Laseranordnung (L_{S}, V_{L}) und/oder die in den Strahlengängen befindlichen Spiegel (4, S1 - S4, 18, U1 - U3) einstellbar sind.

13. Lichtmodul nach einem der Ansprüche 1 bis 12, **dadurch gekennzeichnet, dass** der Scanbereich des LIDAR-Systems und der Beleuchtungsbereich des Beleuchtungssystems zueinander winkelversetzt sind, sodass das LIDAR-System schräg zur Beleuchtung scannt.

14. Lichtmodul nach einem der Ansprüche 1 bis 13, **dadurch gekennzeichnet, dass** das LIDAR-System und das Beleuchtungssystem über die Beleuchtungsoptik 9 bzw. die LIDAR-Austrittsoptik (21) unterschiedliche Sichtfelder überstreichen bzw. ausleuchten.

15. Lichtmodul nach Anspruch 14, **dadurch gekennzeichnet, dass** die LIDAR-Austrittsoptik (21) so ausgelegt ist, dass das LIDAR-System einen Bereich des Verkehrsraums abscannt, welcher breiter ist, als der Beleuchtungsbereich des Beleuchtungssystems.

16. Lichtmodul nach einem der Ansprüche 1 bis 15, **dadurch gekennzeichnet, dass** für die Optiken (14, 17, 19, 21) des LIDAR-Systems diffraktive optische Elemente eingesetzt sind, beispielsweise Beugungsgitter.

17. Lichtmodul nach einem der Ansprüche 1 bis 16, **dadurch gekennzeichnet, dass** die Optiken (o1 - o4, 3, 5) im Laserpfad des Beleuchtungssystems als diffraktive optische Elemente ausgebildet sind.
